(19) **Europäisches Patentamt European Patent Office Office européen des brevets**

(11) **EP 4 685 739 A1**

(12) **EUROPEAN PATENT APPLICATION**

(43) Date of publication:
**28.01.2026 Bulletin 2026/05**

(51) International Patent Classification (IPC):
*G06T 7/00* (2017.01)

(21) Application number: **25189564.5**

(22) Date of filing: **15.07.2025**

(52) Cooperative Patent Classification (CPC):
**G06T 7/0004;** G06T 2207/20132; G06T 2207/30132

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.07.2024 JP 2024121165**

(71) Applicant: **Canon Kabushiki Kaisha
Tokyo 146-8501 (JP)**

(72) Inventor: **SATO, Daisuke
Tokyo, 146-8501 (JP)**

(74) Representative: **Canon Europe Limited
European Intellectual Property Group
4 Roundwood Avenue
Stockley Park
Uxbridge UB11 1AF (GB)**

(54) **IMAGE PROCESSING APPARATUS, IMAGE PROCESSING METHOD, AND PROGRAM**

(57) An image processing apparatus includes an image analysis unit (103) configured to perform image analysis on an image to be inspected to acquire defects obtained as a result of the image analysis and a division unit (104) configured to divide a region subjected to the image analysis to acquire division regions, and the division unit (104) divides the region subjected to the image analysis on the basis of a status of the defects. The status of the defects includes at least the size and position of each defect.

## FIG. 1

**Description**

TECHNICAL FIELD

BACKGROUND

The present disclosure relates to an image processing apparatus, an image processing method, and a program.

In the image-based inspection of infrastructure structures such as bridges and tunnels, a method is used in which a single composite image is generated by combining multiple high-resolution images to detect defects such as cracks and exposed rebar that occur on the wall surfaces of structures. In an image obtained by combining multiple high-resolution images, regions including many progressing defects may be acquired. In this case, when an inspection worker checks the region where defects are progressing, the region to be checked may be extensive, and it may be difficult to conduct an efficient inspection task. For this reason, a method has been proposed to improve the efficiency of the inspection task by dividing the inspection region and displaying the divided inspection regions to the worker. For example, in Japanese Patent No. 6937355, by displaying each section of the inspection region divided by a predetermined distance, the task for checking and editing defects is facilitated.

However, in a case where an inspection region is divided using the technique as described in Japanese Patent No. 6937355, the region may be divided such that defects longer than the division size or areas where defects are concentrated are split. When the region is divided such that defects are split, the worker needs to check multiple division regions to check the overall images of the defects. In addition, in a case where multiple workers share the task and are responsible for different division regions, the task may become inefficient if different workers check and edit different portions of the same defect that have been split, and degradation may be underestimated if a long defect is misidentified as a short defect.

SUMMARY

According to an aspect of the present disclosure, there is provided an image processing apparatus that suppresses misidentification of defects in analysis results of an image to be inspected and improves the efficiency of a defect inspection task.

The present disclosure in its first aspect provides an image processing apparatus as specified in claim 1. Optional features are specified in claims 2 to 13.

The present disclosure in its second aspect provides an image processing method as specified in claim 14.

The present disclosure in its third aspect provides a non-transitory computer-readable storage medium as specified in claim 15.

Features of the present disclosure will become apparent from the following description of embodiments with reference to the attached drawings. The following description of embodiments are described by way of example.

BRIEF DESCRIPTION OF THE DRAWINGS

Fig. 1 is a functional configuration diagram illustrating a schematic configuration of an image processing apparatus according to a first embodiment.
Fig. 2 is a block diagram illustrating an example of the hardware configuration of the image processing apparatus according to the first embodiment.
Figs. 3A and 3B are schematic diagrams illustrating an example of the relationship between a diagram and an inspection target image in the first embodiment.
Fig. 4 is a data configuration diagram illustrating an example of a defect data table indicating the data structure of defect data in the first embodiment.
Fig. 5 is a flowchart illustrating an image processing method according to the first embodiment.
Fig. 6 is a flowchart illustrating an example of a region division process in the first embodiment.
Figs. 7A, 7B, 7C, and 7D are schematic diagrams displaying defect data in individual steps of the region division process in Fig. 6.
Fig. 8 is a schematic diagram illustrating an example of a user interface (UI) screen related to the division of an inspection region in the first embodiment.
Fig. 9 is a schematic diagram illustrating an example of a UI screen related to the display of division regions in the first embodiment.
Figs. 10A, 10B, 10C, and 10D are schematic diagrams displaying the defect data in each step of S503, which is a region division process in a second embodiment.

Figs. 11A, 11B, 11C, and 11D are schematic diagrams displaying the defect data in each step of S503, which is a region division process in the second embodiment.

Fig. 12 is a schematic diagram illustrating an example of a UI screen related to the display of the division regions in a third embodiment.

Figs. 13A, 13B, 13C, and 13D are schematic diagrams displaying the defect data in each step of S503, which is a region division process in a fourth embodiment.

Figs. 14A and 14B are schematic diagrams illustrating an example of a UI screen related to the display of the division regions in the fourth embodiment.

Figs. 15A, 15B, 15C, and 15D are diagrams illustrating examples of a defect severity-level evaluation table in a fifth embodiment.

Fig. 16 is a schematic diagram illustrating an example of a bounding rectangle calculation process in the fifth embodiment.

DESCRIPTION OF THE EMBODIMENTS

Basic Configuration of Image Processing Apparatus in Various Embodiments

In disclosing various embodiments in detail, the basic configuration of an image processing apparatus in the various embodiments will be described.

An image processing apparatus according to the present disclosure includes an image analysis unit configured to perform image analysis on an image to be inspected to acquire defects obtained as a result of the image analysis and a division unit configured to divide a region subjected to the image analysis to acquire division regions. The division unit divides the region subjected to the image analysis on the basis of a status of the defects obtained as a result of the image analysis. The status of the defects includes at least the size and position of each defect but may also include defect type (crack, exposed rebar, etc.), shape (linear, arc, etc.), size, distribution of defects, and concentration level. The region subjected to the image analysis is divided into individual division regions by the division unit in accordance with predetermined division criteria (for example, number of divisions and division size) so that the splitting of the defects is suppressed between adjacent division regions as much as possible in response to such a status of the defects as appropriate. The division regions are then to be subjected to defect inspection. If the region subjected to the image analysis is simply divided without relying on the status of the defects, many defects may be split depending on the status of the defects, thereby hindering the defect inspection task. In the present disclosure, by considering the status of defects in the region subjected to image analysis and dividing the region subjected to the image analysis as appropriate on the basis of the status, the misidentification of defects is suppressed, the efficiency of the defect inspection task is improved, and prompt and accurate defect inspection is achieved.

Specifically, the division unit acquires division-line candidate regions that are division portion candidates in the region subjected to the image analysis, sets division lines in one, some, or all of the division-line candidate regions, and divides the region subjected to the image analysis along the division lines. Considering the need to avoid defect splitting as much as possible, it is preferable for the division unit to acquire the defect surrounding regions that surround the defects obtained as a result of the image analysis and then acquire the division-line candidate regions that do not overlap with the defect surrounding regions. This eliminates the need to check multiple division regions associated with the splitting of defects. Thus, the efficiency of the defect inspection task can be improved. This configuration will be described in detail in a first embodiment.

Depending on the status of the defects obtained as a result of the image analysis, it may not be possible to avoid the splitting of defects when dividing the region subjected to the image analysis. Considering the occurrence of such a situation, the division unit acquires the division-line candidate regions so that the number of overlaps with the defect surrounding regions that surround the defects is reduced in response to the status of the defects. By performing the region division in this manner, the splitting of defects can be reduced as much as possible, the task for checking and editing the defects can be facilitated, and the efficiency of the defect inspection task can be improved. This configuration will be described in detail in a second embodiment. When setting division lines in the division-line candidate regions to form desired division regions, priorities may be assigned as appropriate to selection of the division-line candidate regions for setting division lines. For example, the division unit sets lower priorities to division-line candidate regions where the defect surrounding regions are concentrated and that include portions of defect surrounding regions that overlap with each other. If a division line is set in a division-line candidate region including portions of defect surrounding regions that overlap with each other, the splitting of two or more defects is likely to occur between the division regions divided by the division line. From the viewpoint of suppressing the splitting of defects as much as possible, the priority of setting such a division line can be lowered to prevent such a division line from being set as much as possible.

In a case where the splitting of defects cannot be prevented when dividing the region subjected to the image analysis, the division unit performs region division so that the division regions that are next to each other have portions that overlap with each other. In this case, the division unit causes the defect included in the overlapping portions of the division regions to belong to one of the division regions. Specifically, the overlapping portion of one of the division regions includes all of a first defect and part of a second defect, and the overlapping portion of the other division region includes all of the second defect and part of the first defect. Thus, it is sufficient that the first defect will be an inspection target in the one of the division regions, and the second defect will be an inspection target in the other division region. This eliminates the need to check multiple division regions associated with the splitting of defects. Thus, the efficiency of the defect inspection task can be improved. This configuration will be described in detail in a third embodiment.

As the status of the defects obtained as a result of the image analysis, there may be a case where part of a large defect in size, compared with defects in its surrounding area, is present in the region subjected to the image analysis. Considering the occurrence of such a situation, the division unit ignores the large defect in size and divides the region subjected to the image analysis, and causes the large defect in size to belong to multiple division regions among the division regions. Specifically, the defect surrounding regions surrounding the defects obtained as a result of the image analysis except for the large defect in size are acquired, and division-line candidate regions that do not overlap with the defect surrounding regions are acquired. In this manner, by treating large defects in size as exceptions, the task for checking and editing the defects can be facilitated, and the efficiency of the defect inspection task can be improved. This configuration will be described in detail in a fourth embodiment.

Furthermore, in the present disclosure, the division unit sets severity levels for the defects obtained as a result of the image analysis in accordance with their status and divides, based on the severity levels, the region subjected to the image analysis. The efficiency of the defect inspection task can be improved by using the severity levels assigned to the defects as indicators for performing image division, such as by dividing the region subjected to the image analysis so that the defects with high severity levels are not split. This configuration will be described in detail in a fifth embodiment.

Specific Description of Various Embodiments

In the following, various embodiments of the present disclosure will be described in detail with reference to the drawings. Although multiple characteristics are described in the various embodiments, not all of these multiple characteristics are always essential, and these multiple characteristics may be combined freely. Furthermore, in the diagrams, identical or equivalent configurations are marked with the same reference numerals, and redundant descriptions are omitted.

First Embodiment

In the following, the first embodiment of the present disclosure will be described.

Configuration of Image Processing Apparatus

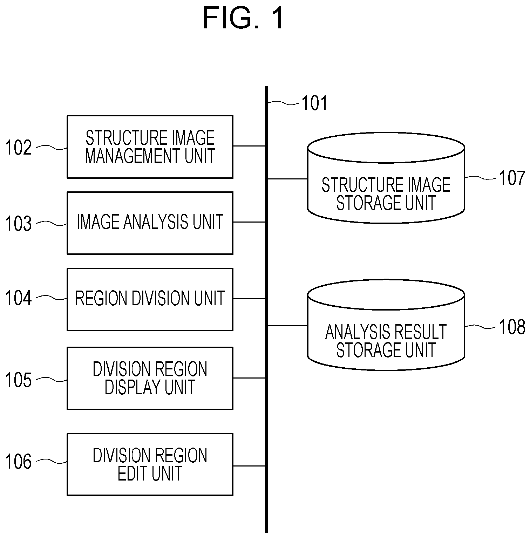

An example of the configuration of an image processing apparatus according to the present embodiment will be described using the functional configuration diagram in Fig. 1.

An image processing apparatus 101 includes a structure image management unit 102, an image analysis unit 103, a region division unit 104, a division region display unit 105, a division region edit unit 106, a structure image storage unit 107, and an analysis result storage unit 108.

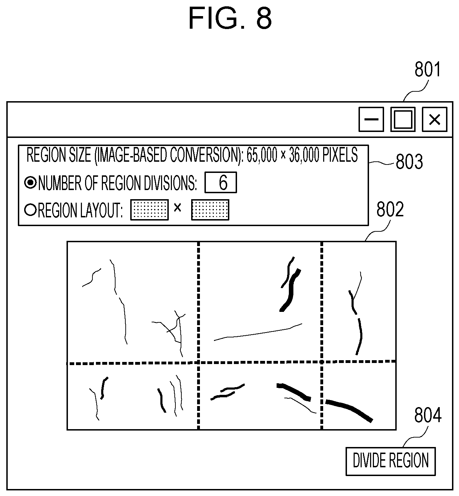

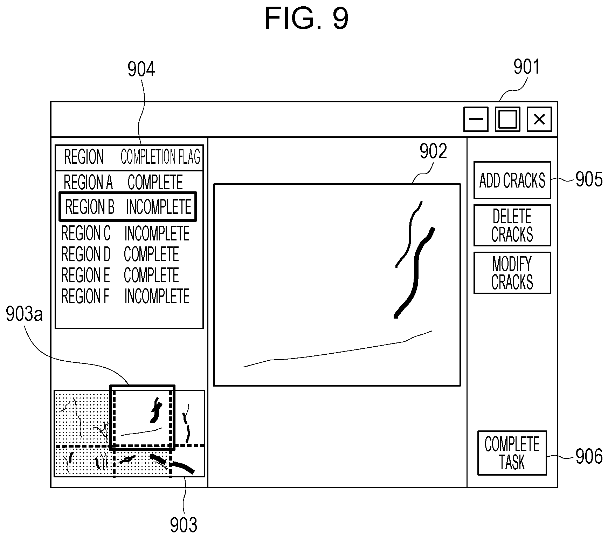

The structure image management unit 102 has functions for storing, deleting, listing, and viewing captured images of a structure to be inspected. The image analysis unit 103 performs image analysis using a learning model created by machine learning and deep learning using artificial intelligence (AI), for example, to detect defects from captured images of the inspection target. On the basis of an analysis result from the image analysis unit 103, the region division unit 104 performs region division on defect data obtained as a result of the image analysis. The division region display unit 105 presents a region division screen, which will be described below using Fig. 8, and an operation screen for checking and editing division regions, which will be described below using Fig. 9, to the user. The division region edit unit 106 has the function of allowing the user to edit detects within the division regions through the operation screen described below using Fig. 9. The structure image storage unit 107 stores captured images of the structure to be inspected. The analysis result storage unit 108 stores image analysis results and editing results.

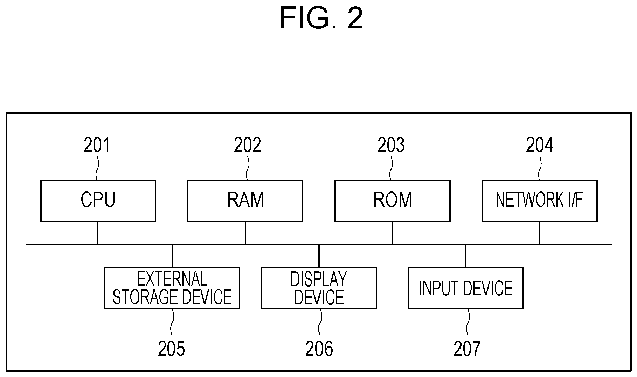

Next, an example of the hardware configuration of the image processing apparatus 101 according to the present embodiment will be described using the block diagram in Fig. 2.

The image processing apparatus 101 includes at least a central processing unit (CPU) 201, a random access memory (RAM) 202, a read-only memory (ROM) 203, a network interface 204, an external storage device 205, a display device 206, and an input device 207.

The CPU 201 controls the operation of each unit of the image processing apparatus 101, and is the main body that executes various processes performed by the image processing apparatus 101, which will be described below. The RAM 202 is a memory that temporarily stores data and control information, and serves as a work area for the CPU 201 to use when performing various processes. The ROM 203 stores fixed operation parameters and operation programs of the image processing apparatus 101. The network interface 204 provides functions for transmitting and receiving data to and from external devices. The external storage device 205 is a device that stores data and has an interface that accepts input-output (I/O) commands to read and write data. The external storage device 205 may be a hard disk drive (HDD), solid state drive (SSD), optical disk drive, semiconductor storage device, or other types of storage device. The external storage device 205 stores computer programs and data for the CPU 201 to perform each of the processes performed by the image processing apparatus 101, which will be described below. The display device 206 is, for example, a liquid crystal display (LCD), which displays necessary information to the user. Examples of the input device 207 include a keyboard, mouse, touch panel, and so forth. The input device 207 accepts necessary input from the user.

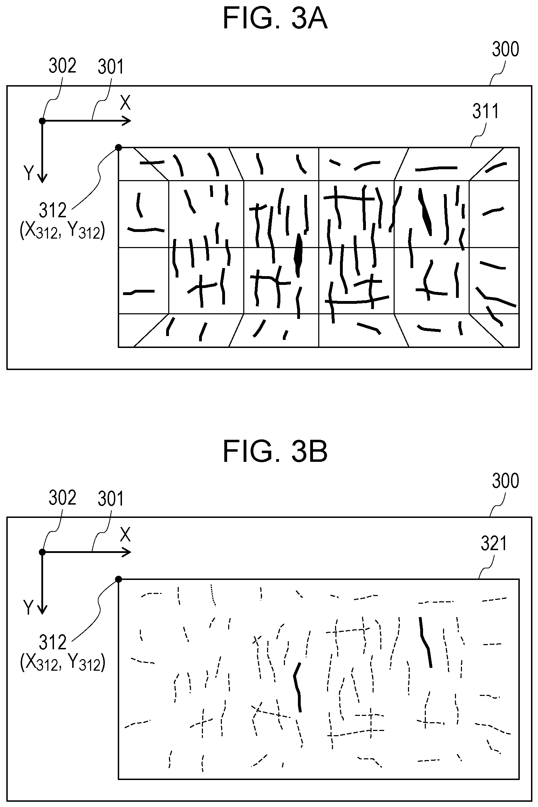

To describe the present embodiment, the relationship between the image and the defect data, and structure information regarding the structure of the inspection target will be described using the schematic diagrams in Figs. 3A and 3B.

In image inspection, it is preferable that captured images of the wall surface of the structure be associated with drawings and managed. Fig. 3A illustrates a state where a captured image 311 of the wall surface of a bridge, as one example of an infrastructure structure, is affixed to a diagram 300. The diagram 300 has diagram coordinates 301 with a point 302 as the origin. The position of the image on the diagram is defined by the vertex coordinates of the upper left corner of the image. For example, the coordinates of the image 311 correspond to the position of a vertex 312 ($X_{312}$, $Y_{312}$). The image is stored, together with the coordinate information, in a memory unit, which is the RAM 202 or the external storage device 205. In the present embodiment, the images used for image inspection of infrastructure structures are large in size because the images are captured in high resolution (for example, 1 mm per pixel) to allow for the detection of fine cracks and so forth. For example, the image 311 in Fig. 3A is a captured image of a deck slab of a bridge, measuring 20 m × 10 m. In a case where the image resolution per pixel is 1.0 mm (1.0 mm/pixel), the image size of the image 311 is 20,000 pixels × 10,000 pixels.

The image 311 captured in high resolution has many (for example, 1,000 or more) defects such as cracks and exposed rebar; however, it is difficult to represent all the defects on the piece of paper. Thus, only some of the defects are displayed on the piece of paper. In the following description, the diagrams in which extensive images and defect data are illustrated also display only some of the defects. Defect data is information regarding the results of automatic defect detection, such as cracks and other defects occurring on concrete wall surfaces, from an image analysis process. The defect data includes defect data obtained by manually adding, as appropriate, data to the defect information obtained through the image analysis process, or defect data obtained by correcting portions where defects were misidentified, for example, in the defect information obtained through the image analysis process. To describe the present embodiment, it is assumed that input images and defect data are associated with diagram coordinates and are managed.

Fig. 3B illustrates a state where defect data 321 corresponding to the image 311 is affixed to the diagram 300 at the same position as the image 311. The defect data 321 contains many (for example, 1,000 or more) defects including those that are not displayed on the piece of paper. The position of each piece of defect data in the defect data 321 on the diagram is defined by the coordinates of the pixels that constitute the piece of defect data.

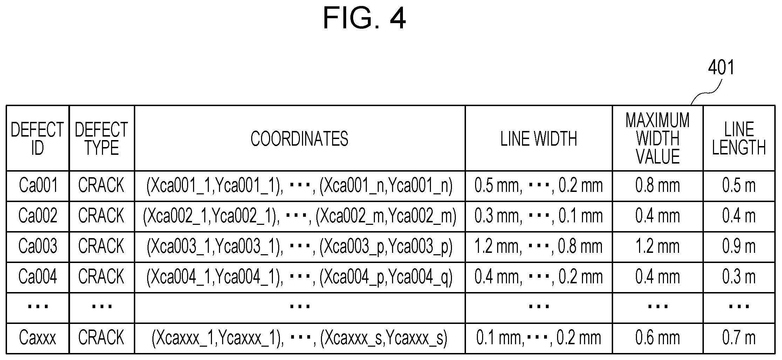

Fig. 4 illustrates an example of a defect data table 401, which represents the data structure of the defect data. The defect data table 401 is constituted by defect ID, defect type, coordinates, line width, maximum width value, and line length. Defect ID indicates the IDs of detected defects, and defect type indicates types, such as crack and exposed rebar. Coordinates indicate multiple pieces of coordinate information that constitute the defect data. Line width indicates an attribute value that represents, in a case where the type of a defect is "crack", the width of the defect at its coordinates. Maximum width value represents, in a case where the type of a defect is "crack", the maximum numerical value of the line width, and line length represents the total length of the crack. For example, a crack Ca001 is represented by a sequence of n consecutive pixels from ($Xca001\_1$, $Yca001\_1$) to ($Xca001\_n$, $Yca001\_n$). In this manner, in the present embodiment, assume that the defect data is represented by pixels.

The expression of the defect data may be represented by vector data such as polylines or curves constituted by multiple points. In a case where the defect data is represented by vector data, the data volume is reduced, and the representation becomes simpler. As an example of defect data of a defect other than cracks, the type of the defect would be "exposed rebar" and the defect ID would be "Ta001". In a case where a defect such as exposed rebar is represented by coordinate information, the defect would be a defect with a region enclosed by a polyline. Note that the information possessed by the defect data is not limited to the information illustrated in the defect data table 401, but the defect data may also hold information regarding other attributes.

The information regarding other attributes may be structure information regarding the structure to be inspected. The structure information includes the structure type, basic structure, various dimensions of the structure, structural member information, and various other information including year of completion. Furthermore, the repair record may include information regarding maintenance, such as repair year, repair location, and repair type. In the present embodiment, assume that the structure information regarding the specific location of the structure, such as structural member information and repair information, is stored together with the location information on the diagram. That is, the location of each structural member on the diagram and the locations of the repair portions on the diagram are stored as part of the structure information. Thus, the correspondence relationship between the structure information, the image, and the defect data can be obtained through the diagram. The structure information can be stored together with the image and defect data in and retrieved from the memory unit, which is the RAM 202 or the external storage device 205. Note that the information included in the structure information is not limited to the above-described information, and the structure information may also hold other information. In addition, limited information may be held for each type of structure.

Image Processing Method

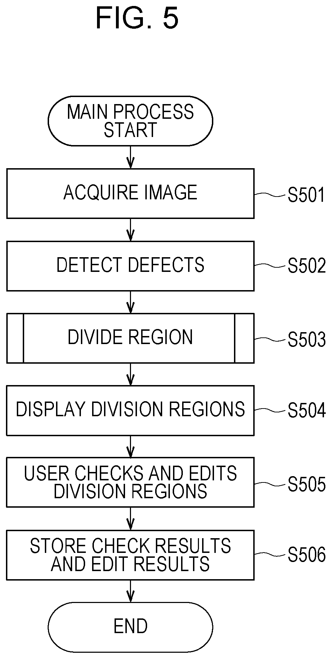

In the following, an image processing method according to the present embodiment will be described. Fig. 5 is a flowchart illustrating the image processing method according to the present embodiment.

First, in S501, the structure image management unit 102 acquires a structure image to be inspected that is stored in the structure image storage unit 107.

Next, in S502, the image analysis unit 103 performs an analysis process on the acquired structure image to calculate defect data corresponding to the structure image. The calculated defect data is stored in the defect data table 401.

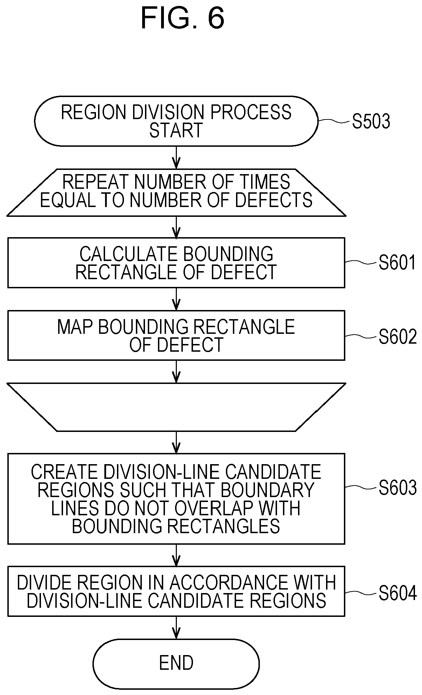

Next, in S503, the region division unit 104 uses the calculated defect data to divide an inspection region (a region subjected to image analysis) on the basis of the status of defects. The status of defects includes the defect type (crack, exposed rebar, etc.), shape (linear, arc, etc.), size, distribution of defects, and concentration level. Note that, in the present embodiment, the entire structure image is the inspection region (region subjected to image analysis). The details of a region division process will be described below using the flowchart in Fig. 6.

Next, in S504, the division region display unit 105 presents, to the user, the division regions into which the inspection region (region subjected to image analysis) is divided and the structure images corresponding to the division regions.

Next, in S505, the division region edit unit 106 presents a screen for checking and editing the division regions to the user, and the user checks and edits defects in the division regions through the screen.

Next, in S506, the division region edit unit 106 stores the results of the user's checking and editing of the defects for the division regions. In this case, the changes to the division regions are also reflected in the original defect detection results.

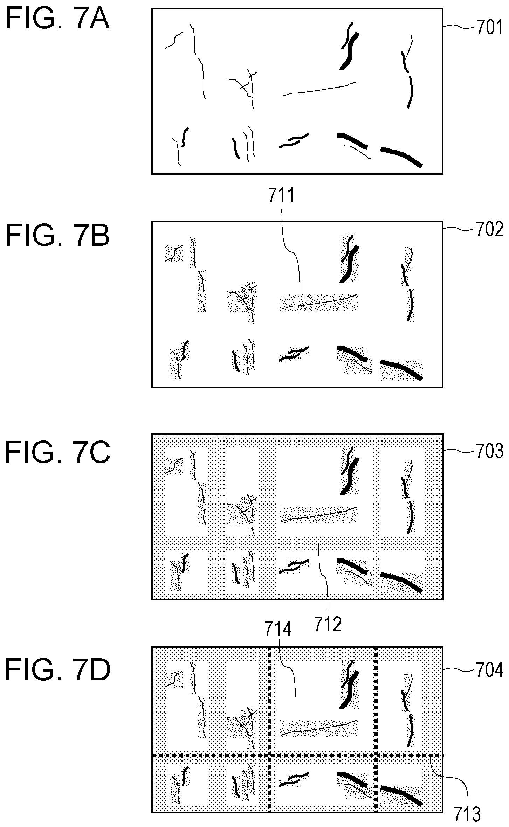

Fig. 6 is a flowchart detailing S503, which is the region division process according to the present embodiment. Figs. 7A to 7D are schematic diagrams displaying the defect data in each step of the region division process S503 in Fig. 6.

Fig. 7A illustrates an example of defect data 701 obtained by performing image analysis on the structure image to be inspected.

First, in S601, the region division unit 104 calculates, for one of the unselected defects in the defect data 701, a defect surrounding region, which surrounds the defect. In this case, the region division unit 104 calculates a bounding rectangle having a rectangular shape that surrounds the defect.

Next, in S602, the region division unit 104 maps the calculated bounding rectangle to the defect data. Fig. 7B illustrates an example of defect data 702, in which a bounding rectangle 711 is mapped to each defect. S601 and S602 are repeated a number of times equal to the number of defects. In this manner, by creating, for each defect, the bounding rectangle 711 corresponding to the defect, it is possible to numerically grasp the status (positions, and so forth) of the defects when region division is to be performed, and acquire desired division-line candidate regions.

Next, in S603, the region division unit 104 calculates division-line candidate regions for calculating division lines. The division-line candidate regions are rectangular regions that are division portion candidates extending vertically or horizontally so as not to overlap with the bounding rectangle 711 of each defect. Each division-line candidate region encircles one or more bounding rectangles 711. Fig. 7C illustrates an example of defect data 703, in which division-line candidate regions 712 are arranged. In this manner, by first setting the division-line candidate regions 712 so as not to overlap with each bounding rectangle 711, the region division that satisfies the user's various requirements can be ensured based on the premise that requirements of no split defects in each division region are satisfied.

Next, in S604, the region division unit 104 creates division regions by setting division lines in one, some, or all of the division-line candidate regions. Fig. 7D illustrates an example of defect data 704, in which division regions 714 are created. In the following, an example of a case is illustrated in which division lines 713, which are illustrated as dashed lines in the diagram, are set in some of the division-line candidate regions 712, and multiple (six in the illustrated example) division regions 714 are created. The number of divisions for the defect data 704 (the number of division regions 714 divided by the division lines 713) may be automatically determined by the region division unit 104 or may be specified by the user. In this manner, the division lines 713 are set in the division-line candidate region 712, which is selected as appropriate from the division-line candidate regions 712 that have already been created, to create the division regions 714. By using this format, the desired region division is realized that matches various division conditions (the number of divisions, division size, and so forth).

For example, in a case where six users share a defect inspection task and perform the defect inspection task together, it is desirable that the number of divisions be six or a multiple of six. The number of divisions may be determined based on the size of division regions (division size). For example, a method is conceivable in which in a case where division regions are superposed for display on a corresponding structure image, the structure image is divided such that each division region has 1,000 pixels × 1,000 pixels or less. Note that if the length and width of the division region are too small, the efficiency of the inspection task will decline. To prevent this, it is desirable to divide the defect data into regions by setting the division lines so that the length and width of the division region are at a certain level or above.

Fig. 8 is a schematic diagram illustrating an example of a user interface (UI) screen related to the division of the inspection region (region subjected to image analysis).

The division region display unit 105 presents a region division screen 801 to the user. The region division screen 801 has a region image 802, a region division item 803, and a region division button 804.

The region image 802 displays a region of defect data, and division lines (illustrated as dashed lines) that divide the region. This allows the user to easily check, from the region image 802, the way in which the region is divided. Note that the user can also move the division lines to adjust the division regions as appropriate. The region image 802 may be displayed so as to be superposed on the structure image corresponding to the region. The region division item 803 is an example of parameter specifications for dividing the region. The region image 802 displays the division lines for region division calculated by the region division unit 104 in accordance with the parameters specified in the region division item 803. The region division button 804 is a button for executing region division. When the user presses the region division button 804, the division lines are determined and the region is divided.

Fig. 9 is a schematic diagram illustrating an example of a UI screen related to the display of the division regions.

The division region display unit 105 presents an operation screen 901 for checking and editing the division regions to the user. The operation screen 901 has a division region image 902, an entire-region image 903, a division region list 904, a defect edit button 905, and a task completion button 906. The division region image 902 displays an image corresponding to a division region among the division regions in an enlarged manner. The division region image 902 may be displayed so as to be superposed on the structure image corresponding to the region of the defect data. The entire-region image 903 displays the entire region of the defect data to be inspected, and highlights, in the entire region of the defect data, an image 903a corresponding to the division region displayed in the division region image 902 in an enlarged manner. The display may be changed by highlighting the positions corresponding to the division regions set to "task complete", such as graying those positions out, depending on the task status of the division regions. This allows the user to easily classify the division regions for which the task is incomplete.

The division region list 904 presents the division regions in a list. The defect edit button 905 provides edit functions for adding defects to and deleting and modifying the defects of the division regions. The task completion button 906, when pressed by the user, adds a task completion flag to the target division region, and in a case where the division region has been edited, such as through the addition of a defect, reflects the edit results in the defect data. In this manner, the image processing apparatus according to the present embodiment has a configuration with an excellent usability that flexibly responds to the actual state of the defect inspection task by incorporating the function that allows the user to edit the defect data as needed.

As described above, according to the present embodiment, the positions of the division lines that divide the region of the defect data are calculated based on the defect data, and the region is divided so that the defects are not split. The task for checking and editing defects can be performed for each of the division regions that are obtained so that the defects are not split, thereby suppressing the misidentification of defects and improving the efficiency of the user's inspection task greatly.

Second Embodiment

Subsequently, a second embodiment of the present disclosure will be described.

The first embodiment illustrates a configuration for calculating division lines so that defects are not split, and performing region division. There may be a case where it is difficult to perform region division such that defects are not split, such as when there are many defects within the inspection region (region subjected to image analysis). The second embodiment illustrates an example of a region division process in a case where the splitting of defects is allowed to some degree. Note that examples of the functional configuration and hardware configuration of the image processing apparatus are substantially the same as those in the first embodiment, and thus description will be omitted.

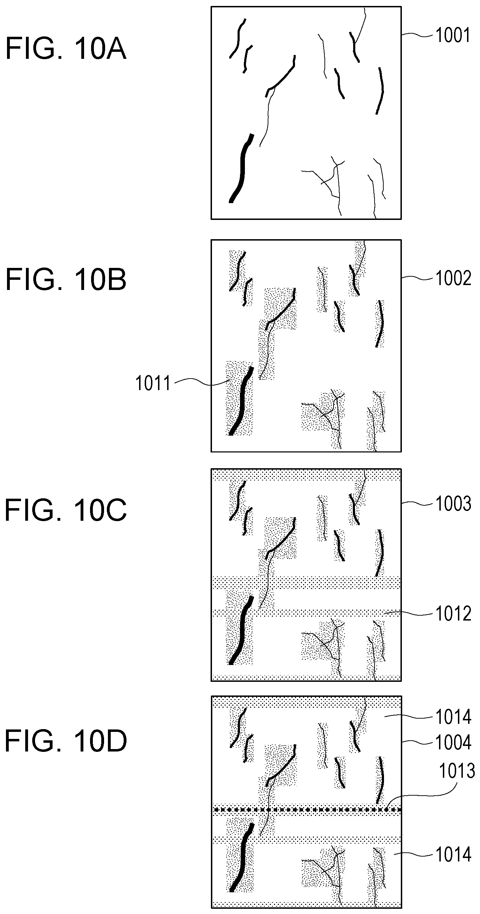

In an image processing method according to the present embodiment, similar to Fig. 5 illustrated in the first embodiment, S501 to S506 are sequentially executed. In the present embodiment, S503, which is the region division process, is executed in substantially the same manner as in Fig. 6 illustrated in the first embodiment. Figs. 10A to 10D are schematic diagrams displaying the defect data in each step of S503, which is the region division process according to the present embodiment.

Fig. 10A illustrates an example of defect data 1001 obtained by performing image analysis on a structure image to be inspected. Note that, in the present embodiment, the entire structure image is the inspection region (region subjected to image analysis). First, in S601, the region division unit 104 calculates, for each defect in the defect data 1001, a defect surrounding region, which surrounds the defect. In this case, the region division unit 104 calculates a bounding rectangle having a rectangular shape surrounding the defect.

Next, in S602, the region division unit 104 maps the calculated bounding rectangle to the defect data. Fig. 10B illustrates an example of defect data 1002, in which a bounding rectangle 1011 is mapped to each defect. In this manner, by creating, for each defect, the bounding rectangle 1011 corresponding to the defect, it is possible to numerically grasp the status of the defects (positions, and so forth) when region division is to be performed, and acquire desired division-line candidate regions.

Next, in S603, the region division unit 104 calculates division-line candidate regions for calculating division lines. Fig. 10C illustrates an example of defect data 1003, in which division-line candidate regions 1012 are arranged. In the first embodiment, the division-line candidate regions that do not overlap with the bounding rectangle of each defect are calculated; however, in the defect data 1002 where the bounding rectangles 1011 are mapped, the division-line candidate regions that do not overlap with the bounding rectangles 1011 of the defects cannot be created. Thus, in the present embodiment, minimal overlap with the bounding rectangles 1011 is allowed to reduce the number of overlaps with the bounding rectangles 1011. For example, the division-line candidate regions 1012 are created in which the number of overlaps with the bounding rectangles 1011 is one as illustrated in the diagram. By creating the division-line candidate regions 1012 such that the number of overlaps with the bounding rectangles 1011 is reduced, this contributes to reducing the complexity of the defect inspection task as much as possible.

Note that, even in a case where it is possible to create a division-line candidate region that does not overlap with the bounding rectangles 1011 of the defects but the position where the division-line candidate region is created is not appropriate for setting a division line, the division-line candidate region whose number of overlaps with the bounding rectangles 1011 of the defects is one may be created. In a case where it is not possible to create a division-line candidate region whose number of overlaps with the bounding rectangles 1011 of the defects is one, a division-line candidate region may be calculated by sequentially increasing the number of overlaps with the bounding rectangles 1011 of the defects to 2, 3, ..., and so on.

Next, in S604, the region division unit 104 creates division regions by setting division lines in one, some, or all of the division-line candidate regions. Fig. 10D illustrates an example of defect data 1004, in which division regions 1014 are created. In the following, an example of a case is illustrated in which a division line 1013, which is illustrated as a dashed line in the diagram, is set in one of the division-line candidate regions 1012 whose number of overlaps with the bounding rectangles 1011 of the defects is one, and multiple (two in the illustrated example) division regions 1014 are created.

In this case, in S604, to set the division line 1013 in one of the division-line candidate regions 1012, the region division unit 104 may assign priorities for selection to the division-line candidate regions 1012 for setting the division line 1013. For example, the region division unit 104 sets a lower priority for the division-line candidate region 1012 where the defect surrounding regions are concentrated and that includes portions of the bounding rectangles 1011 that overlap with each other. If a division line 1013 is set in the division-line candidate region 1012 including portions of the bounding rectangles 1011 that overlap with each other, the splitting of two or more defects is likely to occur between the division regions 1014 divided by the division line 1013. In the present embodiment, from the viewpoint of suppressing defect splitting as much as possible, it is desirable to lower the priority of setting such a division line 1013 to prevent such a division line 1013 from being set as much as possible.

As described above, according to the present embodiment, in a case where it is difficult to divide a region without splitting defects, the region is divided such that the splitting of defects is suppressed as much as possible, while still allowing a certain degree of defect splitting. This suppresses misidentification of defects, and makes it easier for the user to perform the task for checking and editing defects.

Third Embodiment

Subsequently, a third embodiment of the present disclosure will be described.

In the second embodiment, in a case where it is difficult to divide a region without splitting defects, the region is divided such that the splitting of defects is suppressed, while still allowing a certain degree of defect splitting. In the third embodiment, an example of another form of the region division process that allows a certain degree of defect splitting will be illustrated. Note that examples of the functional configuration and hardware configuration of the image processing apparatus are substantially the same as those in the first embodiment, and thus description will be omitted.

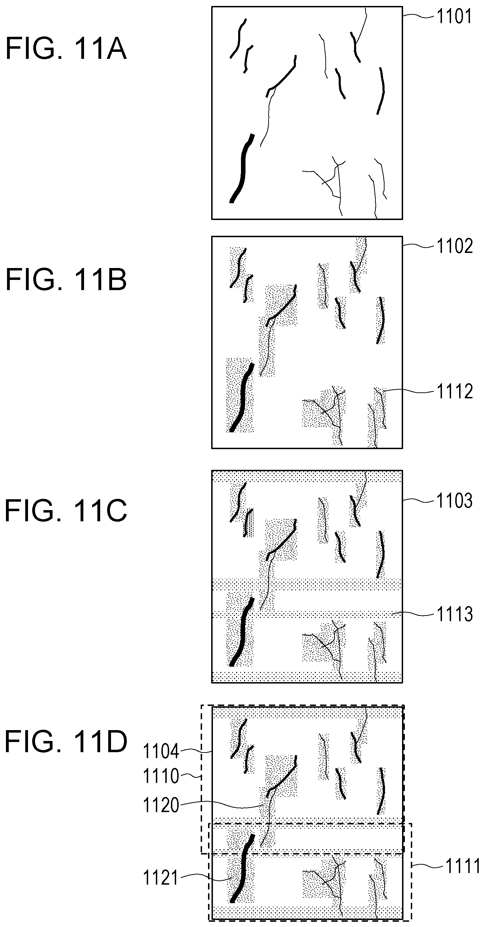

In an image processing method according to the present embodiment, similar to Fig. 5 illustrated in the first embodiment, S501 to S506 are sequentially executed. In the present embodiment, S503, which is the region division process, is executed in substantially the same manner as in Fig. 6 illustrated in the first embodiment. Figs. 11A to 11D are schematic diagrams displaying the defect data in each step of S503, which is the region division process according to the present embodiment.

Fig. 11A illustrates an example of defect data 1101 obtained by performing image analysis on the structure image to be inspected. Note that, in the present embodiment, the entire structure image is the inspection region (region subjected to image analysis). First, in S601, the region division unit 104 calculates, for each defect in the defect data 1101, a defect surrounding region, which surrounds the defect. In this case, the region division unit 104 calculates a bounding rectangle having a rectangular shape surrounding the defect.

Next, in S602, the region division unit 104 maps the calculated bounding rectangle to the defect data. Fig. 11B illustrates an example of defect data 1102, in which a bounding rectangle 1112 is mapped to each defect. In this manner, by creating, for each defect, the bounding rectangle 1112 corresponding to the defect, it is possible to numerically grasp the status of the defects (positions, and so forth) when region division is to be performed, and acquire desired division-line candidate regions.

Next, in S603, the region division unit 104 calculates division-line candidate regions for calculating division lines. Fig. 11C illustrates an example of defect data 1103, in which division-line candidate regions 1113 are arranged. The region division unit 104 allows minimal overlap with the bounding rectangles 1112 to reduce the number of overlaps with the bounding rectangles 1112 and creates, for example, the division-line candidate regions 1113 whose number of overlaps with the bounding rectangles 1112 is one or two as illustrated in the diagram.

Next, in S604, the region division unit 104 creates division regions by setting division lines in one, some, or all of the division-line candidate regions. In the first and second embodiments, a region is divided into two regions by one division line set as a boundary; however, in the present embodiment, a region is divided into a division region 1110 and a division region 1111 by two set division lines, as illustrated in Fig. 11D. The division region 1110 and the division region 1111 partially overlap with each other. A defect 1121 is split by the division region 1110 but not split by the division region 1111. In contrast, a defect 1120 is split by the division region 1111 but not split by the division region 1110 and is included in the division region 1110. In order to avoid double editing of the defects when checking and editing the defects on a division region basis, each of the defects included in the overlapping portions of the division regions 1110 and 1111 is treated as belonging to one of the division regions 1110 and 1111. For each defect in this case, if the entirety of the defect is included in one of the two division regions without being split, the defect is treated as belonging to the division region. That is, the defect 1120 is included in the division region 1110 without being split, and thus the defect 1120 is treated as belonging to the division region 1110. The defect 1121 is included in the division region 1111 without being split, and thus the defect 1121 is treated as belonging to the division region 1111.

With the configuration of the present embodiment, either one of the defects 1120 and 1121 can be treated as an inspection target in a single division region without being split. This eliminates the need to check multiple division regions associated with the splitting of defects even in a case where region division cannot be performed using a single division line without splitting defects. Thus, the efficiency of the defect inspection task can be improved.

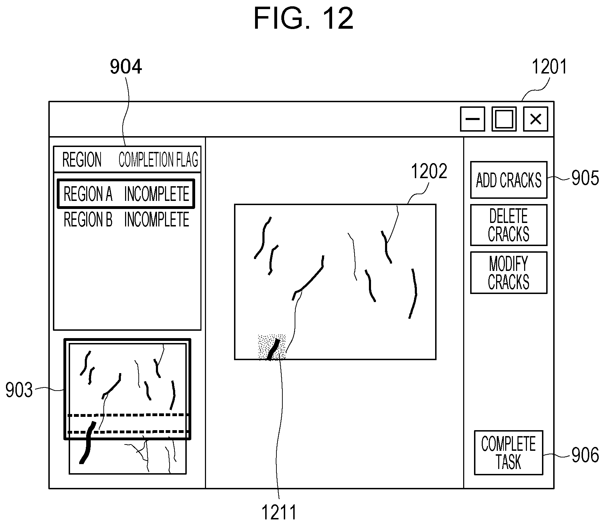

Fig. 12 is a schematic diagram illustrating an example of an operation screen 1201 for checking and editing defects in the division regions according to the present embodiment.

The division region display unit 105 presents the operation screen 1201 for checking and editing the division regions to the user. The operation screen 1201 includes a division region image 1202, the entire-region image 903, the division region list 904, the defect edit button 905, and the task completion button 906. The division region image 1202 displays an image corresponding to a division region in an enlarged manner. The division region image 1202 may be displayed so as to be superposed on the structure image corresponding to the region. In a case where the displayed division region image 1202 includes a defect that is split and considered not to belong to that division region, the bounding rectangle of the defect may be displayed in a highlighted manner. As in the division region image 1202 illustrated in Fig. 12, it is conceivable to gray out, for example, a defect 1211 considered not to belong to that division region, and notify the user that there is no need to check the defect 1211 in the division region under the inspection task. This allows the user to easily classify defects that do not require the inspection task.

As described above, according to the present embodiment, in a case where it is difficult to perform region division without splitting defects, region division can be performed without splitting the defects inside the division regions by allowing partial overlaps between the division regions. This suppresses misidentification of defects, and makes it easier for the user to perform the task for checking and editing defects.

Fourth Embodiment

Subsequently, a fourth embodiment of the present disclosure will be described.

In the second embodiment, in a case where it is difficult to divide a region without splitting defects, the region is divided such that the splitting of defects is suppressed, while still allowing a certain degree of defect splitting. In the following, long defects that traverse regions of the defect data will be considered. In the case of long defects, if a long defect were to be contained in a single division region without splitting, the division region would become too large, thereby reducing the efficiency of the user's inspection task. However, long defects are important in checking structural deterioration, and thus the user wants to check long defects without splitting them. Thus, the fourth embodiment will illustrate an example of a form in which the region division process is performed without splitting long defects. Note that examples of the functional configuration and hardware configuration of the image processing apparatus are substantially the same as those in the first embodiment, and thus description will be omitted.

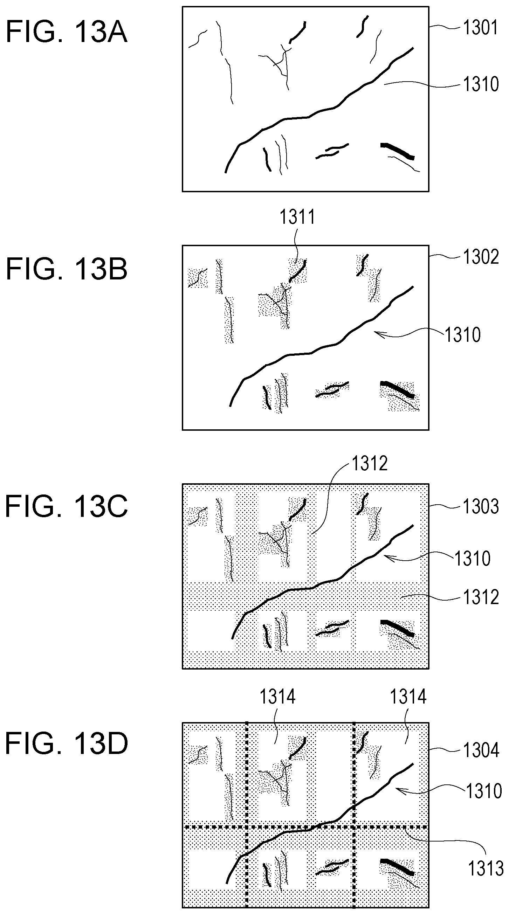

In an image processing method according to the present embodiment, similar to Fig. 5 illustrated in the first embodiment, S501 to S506 are sequentially executed. In the present embodiment, S503, which is the region division process, is executed in substantially the same manner as in Fig. 6 illustrated in the first embodiment. Figs. 13A to 13D are schematic diagrams displaying the defect data in each step of S503, which is the region division process according to the present embodiment.

Fig. 13A illustrates an example of defect data 1301 obtained by performing image analysis on a structure image to be inspected. Note that, in the present embodiment, the entire structure image is the inspection region (region subjected to image analysis). First, in S601, the region division unit 104 calculates, for each defect in the defect data 1301, a defect surrounding region, which surrounds the defect. In this case, the region division unit 104 calculates a bounding rectangle having a rectangular shape surrounding the defect. In this case, for a long defect 1310 that traverses the region of the defect data 1301, the process in S601 is terminated without calculating its bounding rectangle.

Next, in S602, the region division unit 104 maps the calculated bounding rectangle to the defect data. Fig. 13B illustrates an example of defect data 1302, in which a bounding rectangle 1311 is mapped to each defect. Since the bounding rectangle of the long defect 1310 that traverses the region of the defect data 1301 has not been calculated, no bounding rectangle is mapped for the long defect 1310.

Next, in S603, the region division unit 104 calculates division-line candidate regions for calculating division lines. Fig. 13C illustrates an example of defect data 1303, in which division-line candidate regions 1312 are arranged. The division-line candidate regions 1312 are set so as not to overlap with the bounding rectangle 1311 of each defect.

Next, in S604, the region division unit 104 creates division regions by setting division lines in one, some, or all of the division-line candidate regions. Fig. 13D illustrates an example of defect data 1304, in which division regions 1314 are created. In the following, an example of a case is illustrated in which division lines 1313, which are illustrated as dashed lines in the diagram, are set in some of the division-line candidate regions 1312, and multiple (six in the illustrated example) division regions 1314 are created. In this case, assume that the defect 1310 belongs to some of the division regions 1314. In the illustrated example, the defect 1310 traverses and belongs to four division regions 1314.

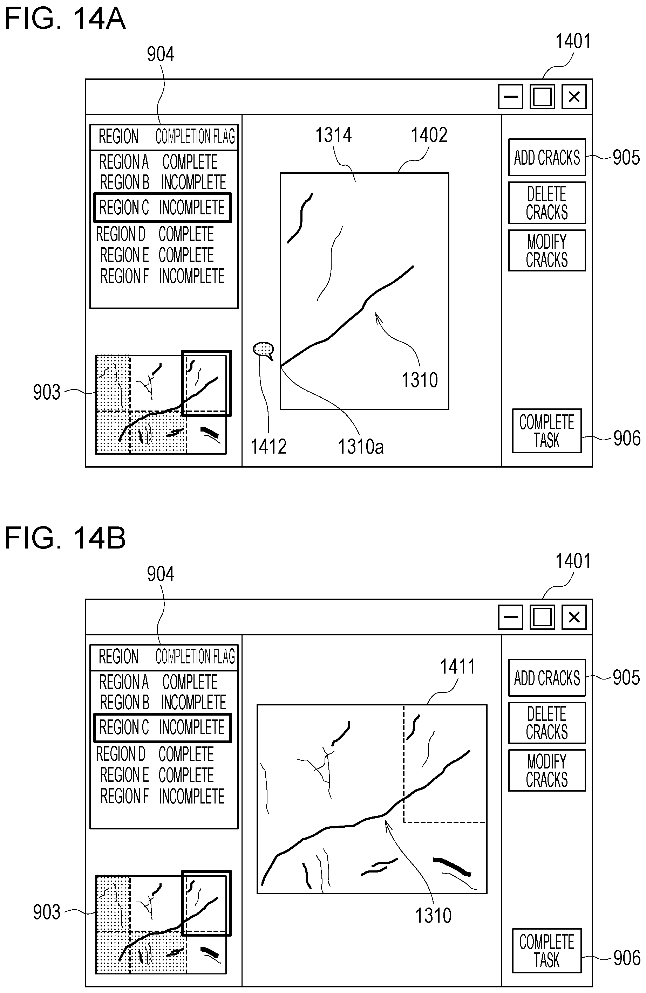

Figs. 14A and 14B are schematic diagrams illustrating examples of an operation screen 1401 for checking and editing the defects in a certain division region according to the present embodiment. Fig. 14A illustrates an example of a certain division region, and Fig. 14B illustrates an example of a case where the entirety of a defect that does not fit into the division region is displayed.

The division region display unit 105 presents the operation screen 1401 for checking and editing division regions to the user. The operation screen 1401 has a division region image 1402, the entire-region image 903, the division region list 904, the defect edit button 905, and the task completion button 906.

As illustrated in Fig. 14A, the division region display unit 105 displays, in the division region image 1402, an image corresponding to the division region in an enlarged manner. The division region image 1402 may be displayed so as to be superposed on the structure image corresponding to the region. In a case where the defect 1310 that does not fit into the division region image 1402 belongs to the division region 1314, an indicator may be assigned to a boundary portion 1310a of the defect 1310 in the division region 1314 to notify the user that the defect 1310 extends beyond the division region 1314. For example, as illustrated in the diagram, it is conceivable that a mark 1412 is assigned to the boundary portion 1310a. This allows the user to easily recognize, by visually recognizing the mark 1412, that it is further necessary to check the defect 1310 using a division region image that covers a wider area.

As illustrated in Fig. 14B, in a case where the task for checking and editing the defect 1310, which is large, is performed, the division region display unit 105 simultaneously displays multiple division regions 1314 that include the entirety of the defect 1310 so that the entirety of the defect 1310 is displayed in a division region image 1411. In this case, the example in which the defect 1310 is large and extends roughly along the diagonal line of the entire-region image is illustrated as an example, and thus the entire-region image is displayed in the division region image 1411. As a result, the user can use the division region edit unit 106 to check and edit the entirety of the long (large) defect 1310 using the division region image 1411, in which the entirety of the long (large) defect 1310 is displayed, without splitting the defect 1310 that traverses multiple division regions into the multiple division regions.

As described above, according to the present embodiment, long defects can be checked and edited without splitting the long defects, which are important in checking structural deterioration, into multiple division regions. This suppresses misidentification of defects, and makes it easier for the user to perform the task for checking and editing defects.

Fifth Embodiment

Subsequently, a fifth embodiment of the present disclosure will be described.

In the second embodiment, in a case where it is difficult to divide a region without splitting defects, region division is performed so that the number of times the defects are split is reduced. In the fifth embodiment, attention is paid to the severity level of each defect. The defects of interest at the time of checking vary depending on the widths, lengths, and shapes of the defects, detection accuracy during image analysis, and other factors. The user's inspection task can be made more efficient by ensuring that the defects of interest are not split at the time of region division. In the present embodiment, examples of the functional configuration and hardware configuration of the image processing apparatus are substantially the same as those in the first embodiment, and thus description will be omitted.

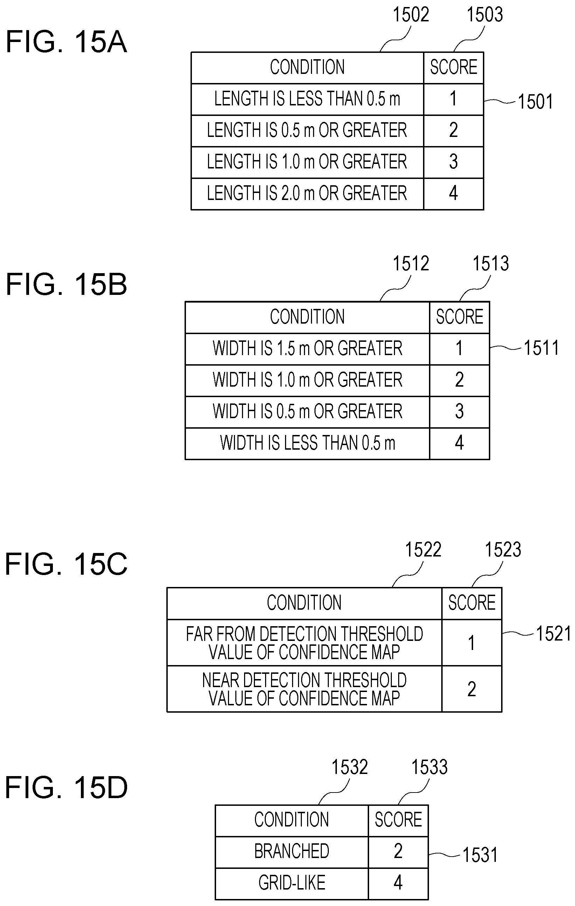

Figs. 15A to 15D are diagrams illustrating examples of a defect severity-level evaluation table according to the present embodiment.

Fig. 15A illustrates an example of a severity level evaluation table for length-based defect severity-level calculation. A severity level evaluation table 1501 is constituted by a condition 1502 and a score 1503. The longer the defect, the more severe and noteworthy it is, and thus, the higher the score.

Fig. 15B illustrates an example of a severity level evaluation table for width-based defect severity-level calculation.

A severity level evaluation table 1511 is constituted by a condition 1512 and a score 1513. The thicker the defect, the easier it is to see and the less likely it is to be missed. Therefore, the thinner the defect, the more likely it is to be missed, and thus, the higher the score.

Fig. 15C illustrates an example of a severity level evaluation table for confidence-map-based defect severity-level calculation. A severity level evaluation table 1521 is constituted by a condition 1522 and a score 1523.

The confidence map serves as an indicator of the confidence level for detected defects in cases where the defects are detected through image analysis. The farther the detected defect is from the threshold value of the confidence map, the higher the confidence level of the detected defect. The closer the detected defect is to the threshold value of the confidence map, the more likely the misidentification is to occur. The defect that may be misidentified is a significant defect at the time of inspection, and thus the score is higher.

Fig. 15D illustrates an example of a severity level evaluation table for defect-shape-based defect severity-level calculation. A severity level evaluation table 1531 is constituted by a condition 1532 and a score 1533. For example, in a case where the concrete surface has a branched or grid-like defect, the likelihood of surface delamination is higher. In this manner, whether the defect is significant depends on its shape. Thus, the score varies depending on defect shape.

In an image processing method according to the present embodiment, similar to Fig. 5 illustrated in the first embodiment, S501 to S506 are sequentially executed. In the present embodiment, regarding S503, which is the region division process, S601 to S604 are sequentially executed in substantially the same manner as in Fig. 6 illustrated in the first embodiment.

In S602 in the region division process S503, the region division unit 104 maps the calculated bounding rectangle to the defect data to calculate the severity level of the defect. The severity level L of each defect can be determined as follows.

$$L = A_1 X_1 + A_2 X_2 + A_3 X_3 + A_4 X_4$$

$$\left( \begin{array}{c} L:\ \text{DEFECT SEVERITY} \\ X_1:\ \text{SCORE BASED ON LENGTH} \\ X_2:\ \text{SCORE BASED ON WIDTH} \\ X_3:\ \text{SCORE BASED ON CONFIDENCE MAP} \\ X_4:\ \text{SCORE BASED ON SHAPE} \\ A_1, A_2, A_3, A_4:\ \text{WEIGHTS FOR SCORES} \end{array} \right)$$

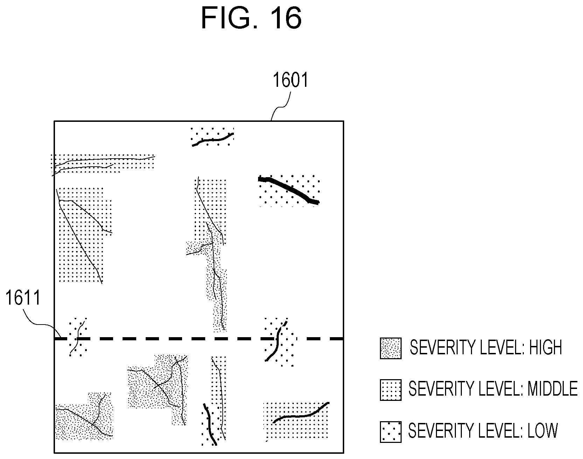

Fig. 16 is a schematic diagram illustrating an example of defect data 1601, in which the bounding rectangles are mapped to calculate the defect severity levels. The region division unit 104 calculates the severity level of each defect and weighs each bounding rectangle.

Consider the case where it is difficult to perform region division so that defects are not split. In the present embodiment, attention is paid to the severity level of each defect, and the splitting of defects with the lowest possible severity level is allowed. In S604, a division line 1611 that divides the region of the defect data is set at a position where defects with the low severity level are split. This prevents defects with relatively high severity levels from being split between division regions, and only defects with the low severity level are likely to be split. Thus, the underestimation of deterioration due to defects and the inefficiency of the inspection task can be reduced as much as possible.

By calculating the severity level of each defect as described above and acquiring the division regions, the total defect severity level can be calculated for each division region. Thus, in a case where multiple users share the task of checking and editing defects in the division regions and perform the task together, the task proficiency level may be defined for each user, and the division regions to be checked and edited may be assigned to the users in accordance with their task proficiency levels. It is conceivable that the division regions are assigned automatically by the division region edit unit 106, for example, in accordance with their task proficiency levels. For example, the task proficiency level is determined as appropriate based on the user's past performance (for example, the number of times the user has performed the task in the past). This can suppress misidentification of defects more reliably and increase the efficiency of the defect inspection task.

As described above, according to the present embodiment, in a case where it is difficult to divide a region without splitting defects, the region is divided such that the splitting of defects with high severity levels is suppressed, while still allowing the splitting of defects with the lowest possible severity level. This can suppress misidentification of defects, and makes it easier for the user to perform the task for checking and editing defects.

According to the present disclosure, an image processing apparatus is realized that suppresses misidentification of defects in analysis results of an image to be inspected and improves the efficiency of the defect inspection task.

Other Embodiments

The foregoing describes various embodiments of the present disclosure, but the present disclosure can be implemented as embodiments, for example, as a system, apparatus, method, program, or recording medium (storage medium). Specifically, the present disclosure may be applied to a system constituted by multiple devices (for example, a host computer, interface devices, image capturing devices, web applications, etc.) or may also be applied to an apparatus constituted by a single device.

It is clear that the present disclosure can also be realized as follows. That is, a recording medium (or storage medium) containing software program code (a computer program) that realizes the functions of any one of the above-described embodiments is supplied to the system or apparatus. Clearly, such a storage medium is a computer-readable storage medium. The computer (or CPU or MPU) of the system or apparatus then reads and executes the program code stored in the recording medium. In this case, the program code itself, which is read from the recording medium, realizes the functions of the embodiment described above, and the recording medium containing the program code constitutes a part of the present disclosure.

The disclosure of various embodiments includes the following configurations and methods.

Configuration 1

An image processing apparatus including:

an image analysis unit configured to perform image analysis on an image to be inspected to acquire defects obtained as a result of the image analysis, and

a division unit configured to divide a region subjected to the image analysis to acquire division regions,

in which

the division unit divides, based on a status of the defects, the region subjected to the image analysis.

Configuration 2

The image processing apparatus according to Configuration 1, in which

the division unit

divides the region subjected to the image so that splitting of the defects is suppressed as much as possible.

Configuration 3

The image processing apparatus according to Configuration 1 or 2, in which

the division unit

acquires division-line candidate regions, which are division portion candidates in the region subjected to the image analysis, and

sets a division line in each of one or more of the division-line candidate regions to divide, along the division line or division lines, the region subjected to the image analysis.

Configuration 4

The image processing apparatus according to Configuration 3, in which

the division unit

acquires defect surrounding regions surrounding the defects, and

acquires, from among the division-line candidate regions, a division-line candidate region that is not superposed on any of the defect surrounding regions.

Configuration 5

The image processing apparatus according to Configuration 3 or 4, in which

the division unit

acquires defect surrounding regions surrounding the defects, and

acquires, from among the division-line candidate regions, a division-line candidate region so that a number of overlaps with the defect surrounding regions is reduced in accordance with the status of the defects.

Configuration 6

The image processing apparatus according to Configuration 5, in which

the division unit

assigns, in a case where the division line is to be set in the division-line candidate region, a priority to selection of the division-line candidate region for setting the division line.

Configuration 7

The image processing apparatus according to Configuration 6, in which

the division unit
sets the priority of the division-line candidate region including portions of the defect surrounding regions that overlap with each other to be low.

Configuration 8

The image processing apparatus according to any one of Configurations 1 to 4, in which

the division unit

divides the region subjected to the image analysis so that the division regions that are next to each other have portions that overlap with each other.

Configuration 9

The image processing apparatus according to Configuration 8, in which

the division unit causes

a defect included in overlapping portions, which are the portions that overlap with each other, among the defects to belong to one of the division regions.

Configuration 10

The image processing apparatus according to Configuration 8 or 9, in which

regarding a first defect and a second defect among the defects,
the overlapping portion of one of the division regions includes all of the first defect and part of the second defect, and the overlapping portion of another one of the division regions includes all of the second defect and part of the first defect.

Configuration 11

The image processing apparatus according to any one of Configurations 1 to 4, in which

the division unit

ignores a certain defect among the defects to divide the region subjected to the image analysis, and

causes the certain defect to belong to a plurality of division regions among the division regions.

Configuration 12

The image processing apparatus according to Configuration 11, in which

the division unit

acquires defect surrounding regions surrounding the defects obtained as a result of the image analysis, except for the certain defect, and

acquires a division-line candidate region that is not superposed on any of the defect surrounding regions.

Configuration 13

The image processing apparatus according to Configuration 11 or 12, further including:

a display unit configured to display the result of the image analysis performed by the image analysis unit, in which

the display unit

Simultaneously displays the plurality of division regions that include all of the certain defect.

Configuration 14

The image processing apparatus according to any one of Configurations 11 to 13, further including:

an edit unit configured to reflect, in the result of the image analysis, a result of editing a defect among the defects in a division region among the division regions, in which

the edit unit

assigns an indicator to a boundary portion of the certain defect in the division region.

Configuration 15

The image processing apparatus according to any one of Configurations 1 to 4, in which

the division unit

sets severity levels for the defects, and

divides, based on the severity levels, the region subjected to the image analysis.

Configuration 16

The image processing apparatus according to Configuration 15, in which

the division unit
calculates the severity level of each of the defects, based on a width, length, and shape of the defect and a confidence map.

Configuration 17

The image processing apparatus according to any one of Configurations 3 to 7, in which

the division unit

sets, based on a number of divisions specified by a user, the division line in the division-line candidate region.

Configuration 18

The image processing apparatus according to any one of Configurations 3 to 7, in which

the division unit

sets, based on a division size specified by a user, the division line in the division-line candidate region.

Configuration 19

The image processing apparatus according to any one of Configurations 3 to 7, in which

the division unit
sets the division line so that lengths and widths of the division regions are at a certain level or above.

Configuration 20

The image processing apparatus according to any one of Configurations 1 to 19, further including:
a management unit configured to manage the result of the image analysis performed by the image analysis unit.

Configuration 21

The image processing apparatus according to any one of Configurations 1 to 20, further including:
a display unit configured to display the result of the image analysis performed by the image analysis unit.

Configuration 22

The image processing apparatus according to Configuration 21, in which

the display unit
displays a certain division region among the division regions in an enlarged manner.

Configuration 23

The image processing apparatus according to Configuration 21 or 22, in which

the display unit

displays a certain division region among the division regions in a highlighted manner.

Configuration 24

The image processing apparatus according to any one of Configurations 1 to 23, further including:
an edit unit configured to reflect, in the result of the image analysis, a result of editing a defect among the defects in a division region among the division regions.

Configuration 25

The image processing apparatus according to Configuration 24, in which

the edit unit

reflects, in the result of the image analysis, addition of a defect and modification of the defects performed for the division region.

Method 1

An image processing method including:

a first step for performing image analysis on an image to be inspected to acquire defects obtained as a result of the image analysis, and

a second step for dividing a region subjected to the image analysis to acquire division regions,

in which

in the second step, the region subjected to the image analysis is divided based on a status of the defects.

Configuration 26

A program for causing a computer to execute individual steps described in Method 1.

Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.
Various embodiments have been described in detail above but it will be understood that the present disclosure is not limited to these embodiments and encompasses all modifications, variants, alternatives and equivalents falling within the scope of the appended claims.

**Claims**

1. An image processing apparatus comprising:

   an image analysis unit (103) configured to perform image analysis on an image to be inspected to acquire defects obtained as a result of the image analysis; and
   a division unit (104) configured to divide, based on a status of the defects, a region subjected to the image analysis to acquire division regions, wherein the status of the defects includes at least the size and position of each defect.

2. The image processing apparatus according to claims 1, wherein the division unit (104) is configured to divide the region subjected to the image analysis to minimize the number of defects that are split between division regions.

3. The image processing apparatus according to claim 1 or 2, wherein the division unit (104) is configured to set the division regions to overlap such that each defect is entirely within at least one division region.

4. The image processing apparatus according to any one of the preceding claims, wherein the division unit (104) is configured to set the division regions to prioritize splitting of defects in at least one part of the region subjected to the image analysis.

5. The image processing apparatus according to claim 4, wherein the division unit (104) is configured to set the division regions to prioritize splitting of defects in at least one part of the region subjected to the image analysis having a higher number of defects.

6. The image processing apparatus according to any one of the preceding claims, wherein the image analysis unit (103) is configured to categorize the defects, and the division unit (103) is configured to set the division regions to prioritize splitting of defects based on the categorization of the defects.

7. The image processing apparatus according to claim 6, wherein the defects are categorized by severity level, and the division unit (104) is configured to set the division regions to prioritize splitting of defects having low severity level.

8. The image processing apparatus according to claim 7, wherein the severity level of each of the defects is set based on a width, length, and shape of the defect and a confidence map.

9. The image processing apparatus according to any one of the preceding claims, wherein the image analysis unit (103) is configured to determine a length of each defect, and the division unit (104) is configured to ignore defects longer than a predetermined length in the setting of the division regions.

10. The image processing apparatus according to any one of the preceding claims, wherein

    the division unit (104) is configured to acquire division-line candidate regions, which are division portion candidates in the region subjected to the image analysis;
    set a division line in each of one or more of the division-line candidate regions; and
    divide, along the division line or division lines, the region subjected to the image analysis.

11. The image processing apparatus according to claim 10, wherein

    the division unit (104) is configured to acquire defect surrounding regions surrounding the defects; and
    acquire, from among the division-line candidate regions, a division-line candidate region so that a number of overlaps with the defect surrounding regions is minimized in accordance with the status of the defects.

12. The image processing apparatus according to claim 11, wherein
    the division unit (104) is configured to:
    assign, in a case where the division line is to be set in the division-line candidate region, a priority to selection of the division-line candidate region for setting the division line, wherein the priority of the division-line candidate region including portions of the defect surrounding regions that overlap with each other is set to be low.

13. The image processing apparatus according to any one of the preceding claims, wherein
    the division unit (104) is configured to divide the region subjected to the image analysis into a number of regions specified by a user.

14. An image processing method to be executed by an image processing apparatus, the image processing method comprising:

> a step for performing image analysis on an image to be inspected to acquire defects obtained as a result of the image analysis; and
> a step for dividing, based on a status of the defects, a region subjected to the image analysis to acquire division regions.

15. A program for causing a computer to carry out the image processing method according to Claim 14.

# FIG. 1

101

102 — STRUCTURE IMAGE MANAGEMENT UNIT

103 — IMAGE ANALYSIS UNIT

104 — REGION DIVISION UNIT

105 — DIVISION REGION DISPLAY UNIT

106 — DIVISION REGION EDIT UNIT

STRUCTURE IMAGE STORAGE UNIT — 107

ANALYSIS RESULT STORAGE UNIT — 108

# FIG. 2

| 201 | 202 | 203 | 204 |
|-----|-----|-----|-----|
| CPU | RAM | ROM | NETWORK I/F |

| EXTERNAL STORAGE DEVICE | DISPLAY DEVICE | INPUT DEVICE |
|--------------------------|----------------|--------------|
| 205 | 206 | 207 |

# FIG. 3A

# FIG. 3B

# FIG. 4

| DEFECT ID | DEFECT TYPE | COORDINATES | LINE WIDTH | MAXIMUM WIDTH VALUE | LINE LENGTH |
|---|---|---|---|---|---|
| Ca001 | CRACK | $(Xca001\_1, Yca001\_1), \cdots, (Xca001\_n, Yca001\_n)$ | 0.5 mm, ···, 0.2 mm | 0.8 mm | 0.5 m |
| Ca002 | CRACK | $(Xca002\_1, Yca002\_1), \cdots, (Xca002\_m, Yca002\_m)$ | 0.3 mm, ···, 0.1 mm | 0.4 mm | 0.4 m |
| Ca003 | CRACK | $(Xca003\_1, Yca003\_1), \cdots, (Xca003\_p, Yca003\_p)$ | 1.2 mm, ···, 0.8 mm | 1.2 mm | 0.9 m |
| Ca004 | CRACK | $(Xca004\_1, Yca004\_1), \cdots, (Xca004\_p, Yca004\_q)$ | 0.4 mm, ···, 0.2 mm | 0.4 mm | 0.3 m |
| ··· | ··· | ··· | ··· | ··· | ··· |
| Caxxx | CRACK | $(Xcaxxx\_1, Ycaxxx\_1), \cdots, (Xcaxxx\_s, Ycaxxx\_s)$ | 0.1 mm, ···, 0.2 mm | 0.6 mm | 0.7 m |

401

# FIG. 5

```
        ╭─────────────────╮
        │  MAIN PROCESS   │
        │     START       │
        ╰─────────────────╯
                 │
                 ▼
    ┌─────────────────────────┐
    │     ACQUIRE IMAGE       │──── S501
    └─────────────────────────┘
                 │
                 ▼
    ┌─────────────────────────┐
    │     DETECT DEFECTS      │──── S502
    └─────────────────────────┘
                 │
                 ▼
    ┌─┬───────────────────┬─┐
    │ │   DIVIDE REGION   │ │──── S503
    └─┴───────────────────┴─┘
                 │
                 ▼
    ┌─────────────────────────┐
    │ DISPLAY DIVISION REGIONS│──── S504
    └─────────────────────────┘
                 │
                 ▼
    ┌─────────────────────────┐
    │  USER CHECKS AND EDITS  │──── S505
    │     DIVISION REGIONS    │
    └─────────────────────────┘
                 │
                 ▼
    ┌─────────────────────────┐
    │   STORE CHECK RESULTS   │──── S506
    │    AND EDIT RESULTS     │
    └─────────────────────────┘
                 │
                 ▼
        ╭─────────────────╮
        │       END       │
        ╰─────────────────╯
```

# FIG. 6

```
┌─────────────────────────────┐
│  REGION DIVISION PROCESS    │──── S503
│           START             │
└─────────────────────────────┘
              │
              ▼
   ╱─────────────────────────╲
  ╱   REPEAT NUMBER OF TIMES   ╲
 ╱  EQUAL TO NUMBER OF DEFECTS  ╲
              │
              ▼
┌─────────────────────────────┐
│    CALCULATE BOUNDING        │──── S601
│    RECTANGLE OF DEFECT       │
└─────────────────────────────┘
              │
              ▼
┌─────────────────────────────┐
│    MAP BOUNDING RECTANGLE    │──── S602
│        OF DEFECT             │
└─────────────────────────────┘
              │
              ▼
  ╲─────────────────────────╱
              │
              ▼
┌─────────────────────────────┐
│  CREATE DIVISION-LINE        │
│  CANDIDATE REGIONS SUCH      │──── S603
│  THAT BOUNDARY LINES DO      │
│  NOT OVERLAP WITH            │
│  BOUNDING RECTANGLES         │
└─────────────────────────────┘
              │
              ▼
┌─────────────────────────────┐
│  DIVIDE REGION IN ACCORDANCE │──── S604
│  WITH DIVISION-LINE          │
│  CANDIDATE REGIONS           │
└─────────────────────────────┘
              │
              ▼
        ┌───────────┐
        │    END    │
        └───────────┘
```

FIG. 7A

701

FIG. 7B

711

702

FIG. 7C

703

714  712

FIG. 7D

704

713

# FIG. 8

REGION SIZE (IMAGE-BASED CONVERSION): 65,000 × 36,000 PIXELS

◉NUMBER OF REGION DIVISIONS: 6

○REGION LAYOUT: ⬚ × ⬚

DIVIDE REGION

801
803
802
804

# FIG. 9

| REGION | COMPLETION FLAG |
|--------|-----------------|
| REGION A | COMPLETE |
| REGION B | INCOMPLETE |
| REGION C | INCOMPLETE |
| REGION D | COMPLETE |
| REGION E | COMPLETE |
| REGION F | INCOMPLETE |

ADD CRACKS

DELETE CRACKS

MODIFY CRACKS

COMPLETE TASK

FIG. 10A

1001

FIG. 10B

1002

1011

FIG. 10C

1003

1012

FIG. 10D

1014

1004

1013

1014

FIG. 11A

1101

FIG. 11B

1102

1112

FIG. 11C

1103

1113

FIG. 11D

1104
1110
1120

1121

1111

# FIG. 12

FIG. 13A

1301

1310

FIG. 13B

1311

1302

1310

FIG. 13C

1312

1303

1310

1312

FIG. 13D

1314          1314

1304

1310

1313

## FIG. 14A

## FIG. 14B

FIG. 15A

|   |   | 1502 | 1503 |
|---|---|------|------|

| CONDITION | SCORE |
|-----------|-------|
| LENGTH IS LESS THAN 0.5 m | 1 |
| LENGTH IS 0.5 m OR GREATER | 2 |
| LENGTH IS 1.0 m OR GREATER | 3 |
| LENGTH IS 2.0 m OR GREATER | 4 |

~1501

FIG. 15B

|   |   | 1512 | 1513 |
|---|---|------|------|

| CONDITION | SCORE |
|-----------|-------|
| WIDTH IS 1.5 m OR GREATER | 1 |
| WIDTH IS 1.0 m OR GREATER | 2 |
| WIDTH IS 0.5 m OR GREATER | 3 |
| WIDTH IS LESS THAN 0.5 m | 4 |

~1511

FIG. 15C

|   |   | 1522 | 1523 |
|---|---|------|------|

| CONDITION | SCORE |
|-----------|-------|
| FAR FROM DETECTION THRESHOLD VALUE OF CONFIDENCE MAP | 1 |
| NEAR DETECTION THRESHOLD VALUE OF CONFIDENCE MAP | 2 |

~1521

FIG. 15D

|   |   | 1532 | 1533 |
|---|---|------|------|

| CONDITION | SCORE |
|-----------|-------|
| BRANCHED | 2 |
| GRID-LIKE | 4 |

~1531

# FIG. 16

| | Europäisches Patentamt European Patent Office Office européen des brevets | **EUROPEAN SEARCH REPORT** | **Application Number** EP 25 18 9564 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/261964 A1 (LIN STEPHANIE [US] ET AL) 18 August 2022 (2022-08-18) | 1,14,15 | INV. G06T7/00 |
| A | * paragraph [0061] * | 2-13 | |
| | ----- | | |
| X | CN 117 630 010 A (NUCLEAR POWER INST CHINA) 1 March 2024 (2024-03-01) | 1,2,14, 15 | |
| Y | * title; | 3,13 | |
| A | paragraphs [0081], [0087], [0082], [0089] * | 4-12 | |
| | ----- | | |
| Y | CN 114 255 223 A (CHINESE GEOLOGICAL UNIV WUHAN) 29 March 2022 (2022-03-29) * paragraphs [0043], [0049] - [0051] * | 13 | |
| | ----- | | |
| Y | JP 2022 062915 A (CANON KK) 21 April 2022 (2022-04-21) * page 10, lines 20-35 * * figure 22a * | 3 | |
| | ----- | | |
| A | JP 2005 351910 A (HITACHI LTD) 22 December 2005 (2005-12-22) * the whole document * | 1-15 | TECHNICAL FIELDS SEARCHED (IPC) G06T |
| | ----- | | |

The present search report has been drawn up for all claims

| Place of search | Date of completion of the search | Examiner |
|---|---|---|
| Munich | 24 November 2025 | Winkler, Gregor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 9564

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2025

| Patent document cited in search report | | Publication date | Patent family member(s) | | Publication date |
|---|---|---|---|---|---|
| US 2022261964 | A1 | 18-08-2022 | CN | 114928692 A | 19-08-2022 |
| | | | EP | 4044587 A1 | 17-08-2022 |
| | | | US | 2022261964 A1 | 18-08-2022 |
| CN 117630010 | A | 01-03-2024 | NONE | | |
| CN 114255223 | A | 29-03-2022 | NONE | | |
| JP 2022062915 | A | 21-04-2022 | JP | 7686381 B2 | 02-06-2025 |
| | | | JP | 2022062915 A | 21-04-2022 |
| | | | US | 2022113261 A1 | 14-04-2022 |
| JP 2005351910 | A | 22-12-2005 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6937355 B